# EUROPEAN PATENT APPLICATION

(11) **EP 2 568 323 A1**
(43) Date of publication of application: **13.03.2013**
(21) Application number: 12425148.9
(22) Date of filing: 07.09.2012
(51) Int. Cl.: G02B 6/44

(54) **High density optical patch panel**

(30) Priority: 09.09.2011 IT RM20110473
(71) Applicant: C.I.S. Sud s.r.l., 00040 Ariccia (RM) (IT)
(72) Inventor: Bernardini, Giuseppe, 00040 Ariccia (RM) (IT)
(74) Representative: Santi, Filippo

(57) **Abstract**

The present invention relates to a high density optical split patch panel (1), comprising one or more modular components (10), at the sides of which paths (15, 15') are arranged for the passage of the fibers, each modular component (10) being provided with a support plate (11), on which a frame (20) is housed, to which a front central plate (12) is hinged on one side thereof, on which a plurality of optical connectors (13) of fibers and a plurality of distributors (14) of the fibers are accommodated, between said support plate (11) and said front central plate (12) a space being defined for housing accessories (28) for the joining of the fibers and/or sinks (29) of the fibers.

## Description

The present invention relates to a high density optical split patch panel.

More specifically, the invention concerns a device of the above kind, specifically realized for all the needs of junction and organization of optical fibers within a telephone exchange.

As is well known, in order to achieve a spread and immediate diffusion of the services, in a globalized world like the present, an increasing use of information technology is a necessity increasingly recognized.

In fact, the possibilities, offered by information technology, to remotely carry out an increasing number of tasks, without being physically present at the place where the effects of these activities must be received, simply by exchanging a series of data, makes the same tasks easier to be carried out and less expensive, while avoiding unnecessary and, at times, complicated movements of individuals.

Telephone operator companies, which already before the onset of these new technologies possessed a dense network of connections between possible users and service providers, consisting of the telephone network, immediately used their network infrastructure to provide the possibility to exchange information and data, and have long tried to use transmission systems increasingly able to send at the same time the amount of information.

The numerical capacity of information that can be transmitted through the same transmission system depends on the width of the transmission "band". The wider is the band the more the transmission system is capable and efficient.

Moreover, more informatics is used and more the need for bandwidth increases.

Naturally, the available bandwidth depends on the apparatuses and the physical carrier of the network. On traditional telephone network of copper, currently are possible bandwidths of the order of ten Mbit, while using a fiber optic network bandwidths can be reached of the order of hundreds of Mbits. It is increasingly stringent, thus, the need to replace the copper network with a fiber optic network.

The optical network is being slowly realized, but it will take some time and a lot of financial commitment by governments and/or telephone operator companies until all users are connected to the optical fiber.

It must be also kept in mind that a user can be connected to the telephone exchange by means of a single fiber, as expected in Italy, or by more fibers, for example four, as expected in France.

Therefore, it is easy to foresee that in a telephone exchange, in the near future, there will be thousands of fibers, which must be handled and exchanged between them to connect different users with different apparatuses, also belonging to different operator companies. Obviously, this will be made possible through a technology that can be the most simple and straightforward to use.

For these operational requirements, within the telephone exchange it is necessary to build a so-called "optic Island", where all the optical fibers start and finish.

In light of the above, it appears evident the need to have available a device that can easily allow these exchanges through short connections on the fly with optic straps and realize the activity that, in technical jargon, is called patching activity.

These and other results of rapid configuration of the fibers become essential in the intense management of the same.

The purpose of the present invention is therefore to provide a high density optical split patch panel that allows to overcome the limits of the solutions according to the prior art technology and to obtain the technical results previously described.

Further object of the invention is that said optical split patch panel can be manufactured with substantially low costs, both as regards production costs and as regards the costs of management and installation.

Another object of the invention is to provide a high density optical split patch panel which is substantially simple, safe and reliable.

It is therefore a specific object of the present invention a high density optical split patch panel, comprising one or more modular components, at the sides of which paths are arranged for the passage of fibers, each modular component being provided with a support plate, on which a frame is housed, to which a front central plate is hinged on one side thereof, on which a plurality of optical connectors of the fibers and a plurality of distributors of the fibers are accommodated, between said support plate and said central plate a space being defined for housing accessories for the joining of the fibers and/or sinks of the fiber.

In particular, according to the invention, below said front central plate at least one channel is present for the passage of fibers from a modular component to an adjacent modular component and/or at least one opening for the passage of fibers from a modular component to a modular component placed at its back.

Preferably, said front central plate is hinged to said frame by hinge means which comprise at least one hinge which has a circumferential open conformation.

Even more preferably, said hinge is arranged at the lower part of said front central plate.

In detail, according to the present invention said hinge is composed of two open annular members, resting on each other with possibility of rotation, respectively a first open annular member integral with said frame, and a second open annular members, integral with said plate.

Preferably, according to the invention, said first open annular member has a central guide, which runs along its entire circumference and is intended to house, with freedom of movement in rotation, a corresponding protrusion of said second open annular member.

The present invention will be now described, for illustrative but not limitative purposes, according to its preferred embodiment, with particular reference to the figures of the accompanying drawings, in which:
- Figure 1 shows a perspective view of a high density optical split patch panel according to the present invention,
- Figure 2 shows a perspective view of a modular component of the high density optical split patch panel of Figure 1, in the closed position,

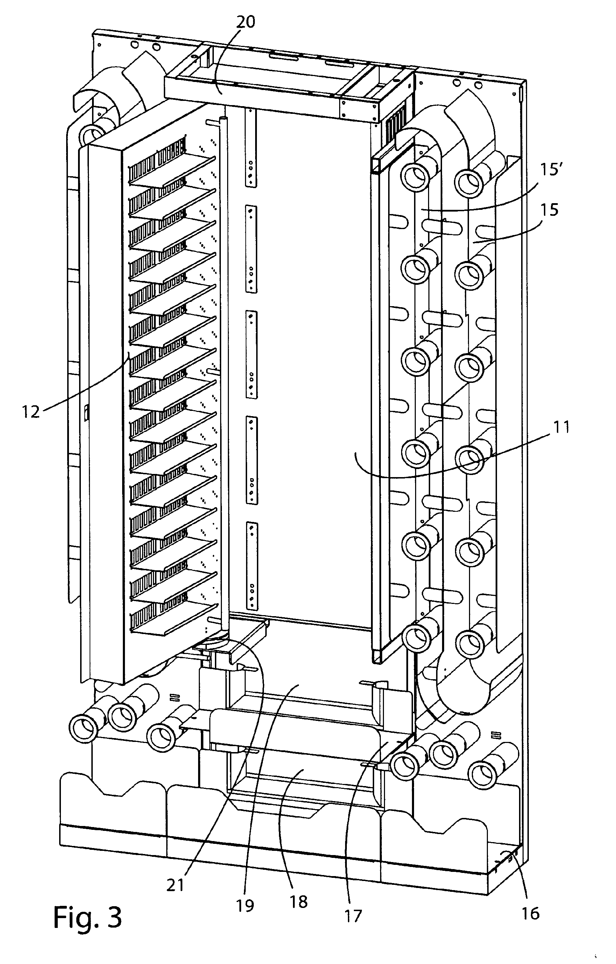

- Figure 3 shows a perspective view of a modular component of the high density optical split patch panel of Figure 1, in the open position,
- Figure 4 shows a perspective view of a detail of the modular component of the high density optical split patch panel of Figure 1, in correspondence of its hinge,
- Figure 5 shows a perspective view of a modular component of the high density optical split patch panel of Figure 1, in the open position, in which a plurality of junction elements of fiber are arranged, and
- Figure 6 shows a perspective view of a modular component of the high density optical split patch panel of Figure 1, in the open position, in which a plurality of accessories of dispersion are arranged.

Referring to the figures, according to the present invention it is proposed to realize a high density optical split patch panel, generally designated by the reference numeral 1, functional and easily manageable from the point of view of normal use and which forms said optic island.

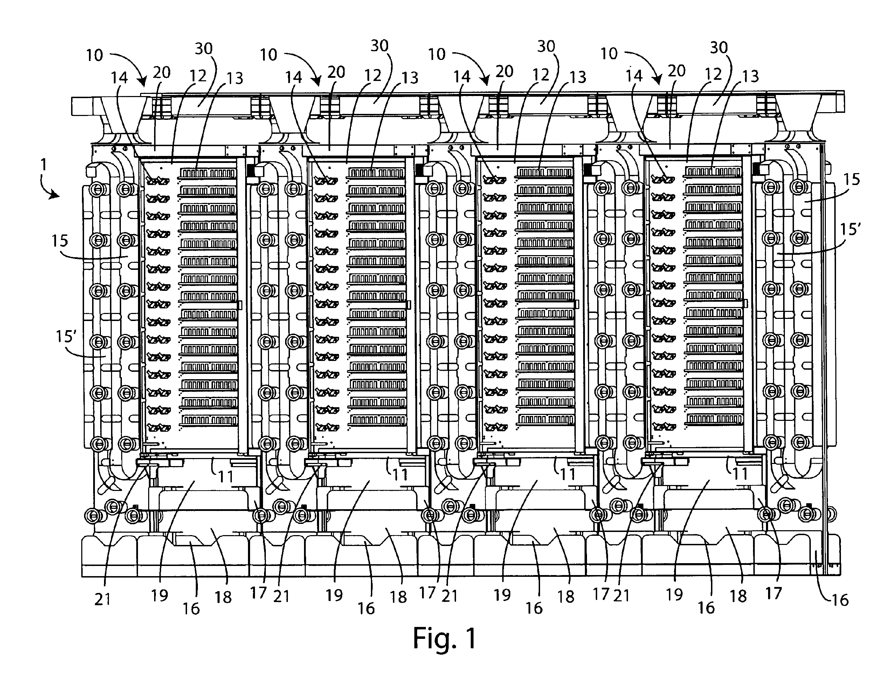

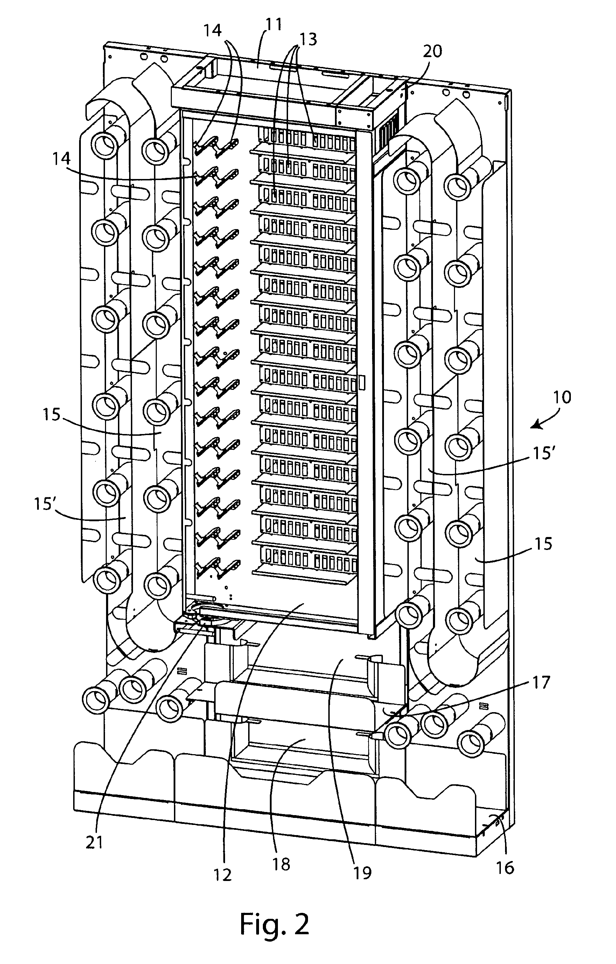

The basic element of the high density optical split patch panel 1 is the modular component 10, of which Figure 2 shows an overall view. In particular, Figure 1 shows a high density optical split patch panel 1 which comprises four modular components 10 arranged side by side.

A feature of the modular component 10 is that it has a depth of 30 cm, as all the cabinets of the telephone exchange, so-called "in a row", so that it can be installed "back to back" constituting a double row in line. The in-line arrangement of a single or double row (back to back) allows a better use of available area on the telephone exchange.

The high density optical split patch panel 1 may then be formed by four modular components 10 which can be modulated and repeated in the line, plus four other in the double row, according to the needs arising from the number of fibers to manage.

Each modular component 10 is constituted by a rear support plate 11 on which a plurality of elements are arranged, and in particular a front central plate 12, with folded edges, on which there are accommodated a plurality of optical connectors 13 of the fibers and a plurality of elements of fiber management, more properly defined distributors 14 of the fibers.

In addition, at the sides of the support plate 11 vertical paths 15, 15' are arranged for the obliged passage and the dispersion of fibers. In particular, for an orderly management of the high density optical split patch panel 1, a first vertical path 15 can be destined to the fibers that come from the telephone exchange apparatus, while a second vertical path 15' may be intended for fibers that come from external optical cables which connect users.

The base of the modular component 10, under the support plate 11, is constituted by two horizontal channels 16, 17.

In the first channel 16 it is possible to collect the fibers going from a modular component 10 to the next in line on the same side of the high density optical split patch panel 1.

In the second channel 17 is instead possible to collect the fibers that go to the opposite side in straight line of the high density optical split patch panel 1, in the case where the same distribution frame accommodates modular components 10 arranged back to back.

The function of the channels 16 and 17 may be exchanged, and consequently both channels 16, 17 of each modular component 10 are provided with respective openings 18, 19, which serve to allow the passage of fibers from one side to the opposite side of modular components 10 arranged back to back on the same high density optical split patch panel 1.

The front central plate 12 is pivoted on a side, by means of two hinges, to a frame 20 which, while retaining the front central plate 12 to a certain distance from the support plate 11, forms a door which closes an internal area of the modular component 10.

In the opening, the front central plate 12 rotates on two hinges. A first hinge (not shown), arranged at the upper part of the front central plate 12, is a normal hinge of the axial type, while a second hinge 21 arranged at the bottom of the front central plate 12, is a particularly and specifically made hinge 21, **characterized in that** it has a circumferential open conformation.

Such particular conformation of the hinge 21 has the function of allowing the passage to the inside of the fibers that from the front central plate 12 descend downwards, to move towards the various vertical paths 15, 15', ie towards the channels 16, 17. In fact, passing through the passage defined by this hinge 21, the fibers do not undergo stresses upon rotation of the front central plate 12 around the hinge 21.

Moreover, the hinge 21 has an opening on the front portion of its circumferential structure, in such a way as to allow that the fibers can be arranged inside without requiring an operation of threading.

Some pins 22, 22', respectively a first pin 22 integral with the frame 20 and a second pin 22' integral with the plate 12, contributes to stable driving of the fibers inside the hinge 21.

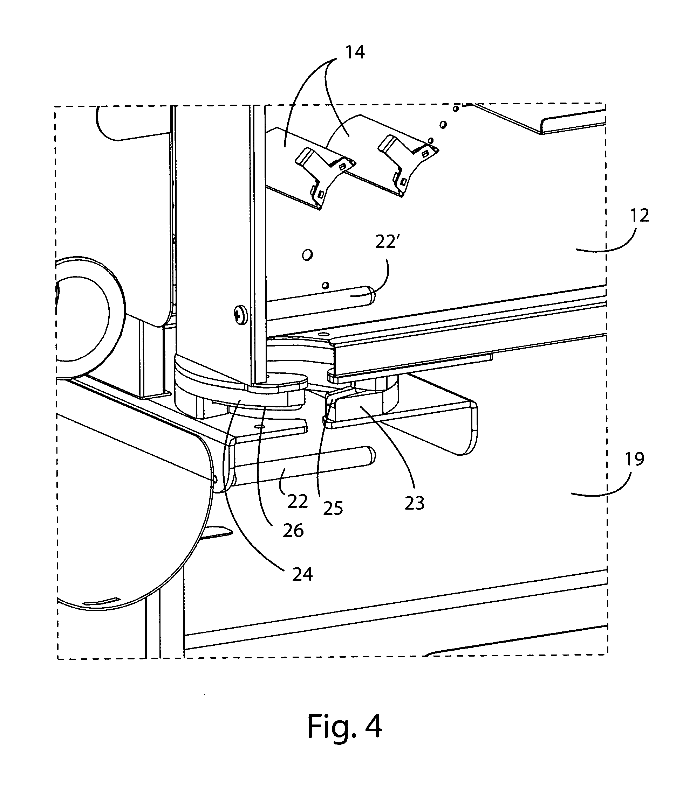

With particular reference to Figure 4, the open circumferential hinge 21, is composed of two open annular members 23, 24, a first open annular member 23 and a second open annular member 24. The first open annular member 23 is integral with the frame 20, while the second open annular member 24 is rigidly coupled to the plate 12. The first open annular member 23 has a central guide 25, which runs along the entire circumference of the first open annular element 23 and intended to house, with freedom of movement in rotation, a corresponding protrusion 26 of the second open annular element 24.

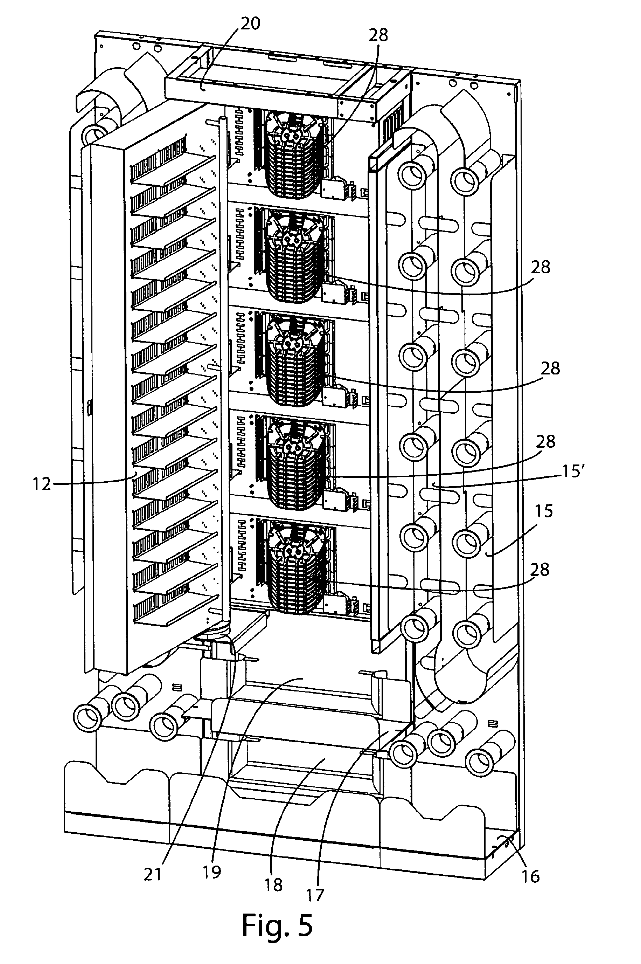

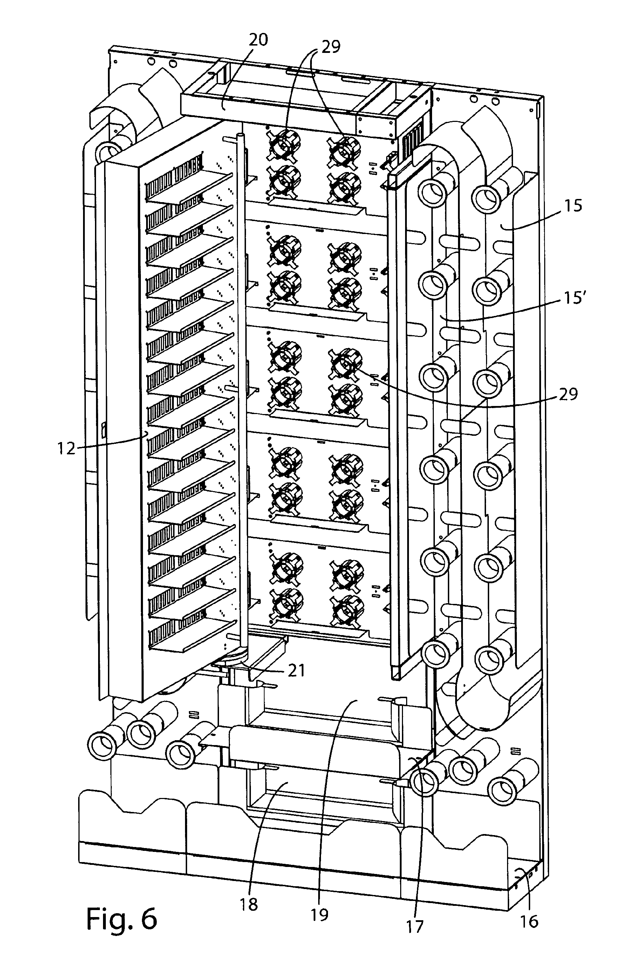

Respectively with reference to Figure 5 and Figure 6, on the support plate 11 of the modular component 10 may be located accessories 28 for the junction of the fibers, if the modular component 10 is intended for the arrival of the cables coming from the users, or fiber dispersers 29, if the modular component 11 is intended for the arrival of the fibers coming from the apparatuses of rhe telephone exchange.

In particular conditions of small amounts of optical fibers, the high density optical split patch panel 1 according to the present invention can be constituted by a single modular component 10. In fact, one and the same modular component 10 may contain within it both connecting elements 28 and accessories of dispersion 29.

While the cables can enter the interior of the modular components 10 both from below and from above, the fibers of the apparatuses always come from above on a dedicated channel, colored in yellow, represented in Figure 1 and indicated by the reference number 30 and, in order to enter into the modular components 10 follow the first vertical path 15 of each modular component.

The present invention has been described for illustrative but not limitative purposes, according to its preferred embodiments, but it is to be understood that variations and/or modifications can be made by those skilled in the art without departing from the relevant scope of protection, as defined by the appended claims.

## Claims

1. High density optical split patch panel (1), comprising one or more modular components (10), at the sides of which paths (15, 15') are arranged for the passage of the fibers, each modular component (10) being provided with a support plate (11), on which a frame (20) is housed, to which a front central plate (12) is hinged on one side thereof, on which a plurality of optical connectors (13) of fibers and a plurality of distributors (14) of the fibers are accommodated, between said support plate (11) and said front central plate (12) a space being defined for housing accessories (28) for the joining of the fibers and/or sinks (29) of the fibers.

2. High density optical split patch panel (1) according to claim 1, **characterized in that** below said central front plate (12) at least one channel (16, 17) is present for the passage of fibers from modular component (10) to an adjacent modular component.

3. High density optical split patch panel (1) according to claim 1 or 2, **characterized in that** below said central front plate (12) at least one opening (18, 19) is present for the passage of fibers from a modular component (10) to a modular component placed at its back.

4. High density optical split patch panel (1) according to any of the preceding claims, **characterized in that** said front central plate (12) is hinged to said frame (20) by hinge means which comprise at least one hinge (21) which has a circumferential open conformation.

5. High density optical split patch panel (1) according to claim 4, **characterized in that** said hinge (21) is arranged at the lower part of said front central plate (12).

6. High density optical split patch panel (1) according to claim 4 or 5, **characterized in that** said hinge (21) is composed of two open annular members (23, 24), resting on each other with possibility of rotation, respectively a first open annular member (23) integral with said frame (20), and a second open annular member (24), integral with said plate (12).

7. High density optical split patch panel (1) according to claim 6, **characterized in that** said first open annular member (23) has a central guide (25), which runs along its entire circumference and intended to house, with freedom of movement in rotation, a corresponding protrusion (26) of said second open annular member (24).
